# EUROPÄISCHE PATENTSCHRIFT

(11) **EP 1 917 297 B1**
(45) Veröffentlichungstag und Bekanntmachung des Hinweises auf die Patenterteilung: **12.09.2012**
(21) Anmeldenummer: 06775733.6
(22) Anmeldetag: 21.07.2006
(51) Int. Cl.: C08J 9/00

(54) **SELEKTIV-KÜHLUNG BZW. SELEKTIV-HEIZUNG FÜR EINE DAMPFKAMMER IM SCHAUMSTOFFFORMTEILHERSTELLUNGSPROZESS**
SELECTIVE COOLING OR SELECTIVE HEATING FOR A STEAM CHAMBER DURING THE PRODUCTION OF MOULDED FOAM ELEMENTS
DISPOSITIF DE REFRIGERATION OU DE CHAUFFAGE SELECTIF DESTINE A UNE CHAMBRE A VAPEUR DANS LE PROCESSUS DE FABRICATION DE CORPS MOULES EN MOUSSE

(30) Priorität: 26.08.2005 DE 102005040810; 02.11.2005 DE 102005052603
(43) Veröffentlichungstag der Anmeldung: 07.05.2008
(73) Patentinhaber: Kurtz GmbH, 97907 Hasloch (DE)
(72) Erfinder: BAUER, Martin, D-97941 Tauberbischofsheim (DE)
(74) Vertreter: Böck, Bernhard
(86) Internationale Anmeldenummer: PCT/DE2006/001276
(87) Internationale Veröffentlichungsnummer: WO 2007/022742

(56) Entgegenhaltungen:
- EP-A- 1 593 475
- DE-A1- 10 036 185
- US-B1- 6 299 808

## Beschreibung

Die Erfindung betrifft eine Dampfkammer für eine Vorrichtung zur Herstellung von Schaumstoffformteilen und ein Verfahren zum Betrieb einer derartigen Vorrichtung nach den Oberbegriffen der Patentansprüche 1 und 8.

Beim konventionellen Herstellungsprozess von Formteilen aus Partikelschaumstoffen wird nach dem Bedampfen der Dampfkammer und des Schaumstoffes in der Regel eine große Menge Kühlwasser in die Dampfkammer geleitet. Das Kühlwasser nimmt dabei die Wärmeenergie der durch das Bedampfen heiß gewordenen Dampfkammer und der die Dampfkammer umgebenden Bereiche, insbesondere der Formkavität und des sich in der Formkavität befindlichen Schaumstoffes, auf. Durch Ableitung des Kühlwassers aus der Dampfkammer kann somit diese Wärmeenergie abgeleitet werden.

Danach wird zumeist ein Vakuum an die Dampfkammer angelegt, um das restliche Kühlwasser von den Oberflächen der inneren Dampfkammerwandung und aus dem Schaumstoff bei einem niedrigeren Druck zu verdampfen. Im Ergebnis erreicht die gesamte Vorrichtung, inklusive der Dampfkammer und des Formteils, eine Entformungstemperatur von beispielsweise 80°C, welche zur Entformung notwendig ist.

Diese umfassende Erwärmung der gesamten Vorrichtung durch die anfängliche Bedampfung und die umfassende Kühlung der gesamten Vorrichtung durch die anschließende Einleitung des Kühlwassers ist jedoch besonders nachteilig. Insbesondere in einem Serienherstellungsprozess der Schaumformteile werden Maschinenbereiche kontinuierlich erwärmt und anschließend wieder abgekühlt, die für den eigentlichen Formteilherstellungsprozess auch auf einer konstanten Temperatur gehalten werden können. Durch diesen alternierenden Temperaturwechsel wird eine erhebliche Menge an Energie verbraucht. Für den eigentlichen Formteilherstellungsprozess reicht im Wesentlichen lediglich eine Erwärmung des Schaumstoffes aus, damit dieser verschweißt.

Anschließend würde ebenfalls im Wesentlichen lediglich eine Abkühlung des Schaumstoffes ausreichen, damit er entformbar wird. Alle anderen Energieübergänge in Zusammenhang mit dem Formteilherstellungsprozess sind kontraproduktiv und erzeugen Zusatzkosten im Betrieb. Diese Zusatzkosten resultieren im Wesentlichen aus einer zusätzlichen Menge an Energie, Wasserdampf und einer längeren Zykluszeit.

Aus der EP 1 593 475 A1 geht eine Vorrichtung zur kontinuierlichen Herstellung einer Polyolefin Schaummatte hervor, bei der Polyolefin Kügelchen auf einem oberen und unteren Fließband durch eine Vorrichtung transportiert werden, in der innerhalb einer oberen und unteren Oberfläche Wärme- und Kühlzonen angeordnet sind. Die Wärmezonen dienen zur Erwärmung der Polyolefin-Kügelchen, beispielsweise durch Dampf, und ermöglichen die Vernetzung der Kügelchen, während die Kühlzone das Abkühlen der Schaummatte ermöglicht. Hierbei dienen die Wärme- und Kühlzonen zur sukzessiven direkten Erwärmung bzw. Abkühlung der Schaumstoffteile und ermöglichen nicht, vorbestimmte Abschnitte einer Dampfkammer auf einer konstanten Temperatur zu halten, während andere Abschnitte abwechselnd erwärmt oder gekühlt werden, wodurch langsame Durchlaufzeiten, umfangreiche bzw. große Anlagen realisiert werden müssen.

Die US 6 299 808 B1 betrifft ebenfalls eine Vorrichtung zur kontinuierlichen Herstellung eines Schaumstoffs mittels eines Fließbandes, wobei eine HIP-Emulsion (High internal phase emulsion) in einer Wärmezone polymerisiert. Auch in dieser Vorrichtung dient die Wärmezone, die Wärme mittels eines Lufterhitzers, IR-Lampen, Mikrowellen, Dampf oder ähnlichen Mittel erzeugt, dazu, die Wärme unmittelbar auf das Schaumstoffformteil zu übertragen, und nicht dazu, Teile der Vorrichtung, die nicht mit dem Schaumstoffformteil in Kontakt stehen, unter einer konstanten Temperatur zu halten.

Schließlich beschreibt die DE 100 36 185 A1 ein Verfahren zur Herstellung eines Werkstoffverbundes aus einem Partikelschaum aus thermoplastischem Kunststoff. Hierzu werden vorgeschäumte Partikel auf den Bereich ihrer Schmelztemperatur erhitzt und miteinander zu einem Formkörper und anschließend mit einer Schicht verbunden. Als Wärmequelle wird Dampf verwendet und der erzeugte Formkörper wird weiter getempert.

Aufgabe der vorliegenden Erfindung ist es, eine neue Dampfkammer für eine Vorrichtung zur Herstellung von Schaumstoffformteilen und ein Verfahren zum Betrieb einer solchen Vorrichtung vorzuschlagen.

Diese Aufgabe wird durch die vorliegende Erfindung nach der Lehre des Patentanspruchs 1 und des Patentanspruchs 7 gelöst.

Vorteilhafte Ausführungsformen der Erfindung sind Gegenstand der Unteransprüche.

Die erfindungsgemäße Dampfkammer für eine Vorrichtung zur Herstellung von Schaumstoffformteilen in einer Formkavität weist dazu eine Dampfkammerwandung auf, wobei die Dampfkammerwandung zumindest einen der Formkavität zugewandten Kavitätsabschnitt und einen der Formkavität abgewandten Umgebungsabschnitt aufweist, und wobei der Umgebungsabschnitt der Dampfkammerwandung zumindest bereichsweise eine Wärmevorrichtung aufweist, und wobei der Umgebungsabschnitt der Dampfkammerwandung selektiv durch die Wärmevorrichtung erwärmt werden kann.

Die Ausführungsform der Dampfkammer ist grundsätzlich beliebig. Die Wandung der Dampfkammer weist jedoch in der Regel einen Kavitätsabschnitt auf. Dieser Kavitätsabschnitt ist an der Formgebung des Schaumstoffformteiles beteiligt. Häufig werden zwei Dampfkammerhälften verwendet, die jeweils einen Kavitätsabschnitt aufweisen. Die zwei Kavitätsabschnitte bilden zusammen dann die Formkavität, in der das Schaumstoffformteil hergestellt wird. Der Kavitätsabschnitt der Dampfkammerwandung ist meistens dampfdurchlässig, so dass Dampf aus dem Inneren der Dampfkammer in die Formkavität gelangen kann.

Weiterhin weist die Dampfkammerwandung einen Umgebungsabschnitt auf. Dieser Umgebungsabschnitt bildet im Wesentlichen den Rest der Dampfkammerwandung und stellt zusammen mit dem Kavitätsabschnitt die geschlossene und druckbeständige Umhüllung der Dampfkammer dar.

Der Kavitätsabschnitt berührt in der Regel den Schaumstoff, wobei der Umgebungsabschnitt mit dem Schaumstoff nicht in Berührung kommt.

Der Umgebungsabschnitt der Dampfkammerwandung weist zumindest bereichsweise erfindungsgemäß eine Wärmevorrichtung auf. Mittels der Wärmevorrichtung ist der Umgebungsabschnitt der Dampfkammerwandung selektiv erwärmbar. Die Ausführungsform der Wärmevorrichtung ist grundsätzlich beliebig. Sie sollte jedoch dampfbeständig sein. Die Anordnung der Wärmevorrichtung ist ebenfalls grundsätzlich beliebig. Sie muss nicht zwingend den gesamten Umgebungsabschnitt der Dampfkammerwandung umfassen, sollte jedoch im Wesentlichen den größten Bereich des Umgebungsabschnittes der Dampfkammerwandung abdecken.

Durch die Wärmevorrichtung kann der Umgebungsabschnitt der Dampfkammerwandung auf einer konstanten Temperatur gehalten werden. Wenn diese Temperatur oberhalb der Temperatur des in die Dampfkammer geleiteten Dampfes liegt, dann kann gewährleistet werden, dass sich der Dampf nicht am Umgebungsabschnitt der Dampfkammerwandung anlagert und/oder dort kondensiert. Im Ergebnis kann damit eine Transpirationskühlung des Umgebungsabschnittes durch Verdampfen des angelagerten und/oder kondensierten Dampfes verhindert werden.

Der Kavitätsabschnitt der Dampfkammerwandung weist keine derartige Wärmevorrichtung auf. Damit tritt keine Verhinderung der Transpirationskühlung am Kavitätsabschnitt ein. Im Ergebnis ist damit eine selektive Heizung des Umgebungsabschnittes bzw. eine selektive Kühlung des Kavitätsabschnittes erreicht. Der Umgebungsabschnitt bleibt bei einer definierten konstanten Temperatur und wird somit im Prozesszyklus nicht alternierend aufgeheizt und abgekühlt. Dies resultiert in einer Energieeinsparung, Wasserdampfeinsparung und einer Zykluszeitverkürzung.

Erfindungsgemäß weist die Dampfkammer eine Kühlvorrichtung auf, wobei der Kavitätsbereich selektiv durch die Kühlvorrichtung gekühlt werden kann. Dies ist besonders vorteilhaft zur effektiven Unterstützung der Transpirationskühlung durch den am Kavitätsbereich kondensierten Dampf. Die Kühlvorrichtung ist dabei derart ausgeführt, dass sie im Wesentlichen lediglich den Kavitätsbereich und nicht den Umgebungsbereich der Dampfkammerwandung kühlt. Dadurch wird überraschenderweise eine Energieverschwendung vermieden. Durch Kühlung des Kavitätsbereiches wird mittelbar oder unmittelbar auch der Schaumstoff gekühlt.

Die Ausführungsform der Wärmevorrichtung ist grundsätzlich beliebig. In einer besonders vorteilhaften Ausführungsform wird die Wärme über Dampf, insbesondere über Wasserdampf, zugeführt. Diese Variante ist besonders kostengünstig, da Dampf an der Vorrichtung ohnehin zur Verfügung steht. Die Temperatur des Dampfes sollte jedoch zumindest geringfügig über der Temperatur des Prozessdampfes liegen, um den Umgebungsabschnitt der Dampfkammerwandung auf eine leicht höhere Temperatur als die Temperatur des Prozessdampfes bringen zu können, und somit eine Kondensation des Prozessdampfes am Umgebungsabschnitt der Dampfkammerwandung zu verhindern.

In einer weiteren vorteilhaften Ausführungsform ist am und/oder im Umgebungsabschnitt der Dampfkammerwandung zumindest ein Kanal vorgesehen, wobei der Dampf durch den Kanal geleitet werden kann. Diese Ausführungsform bietet besondere Vorteile, da ein derartiger Kanal beispielsweise durch Einfräsen einer Nut bei der Herstellung der Dampfkammer erzeugt werden kann. Der Verlauf der Kanäle ist grundsätzlich beliebig. Er kann sich ringförmig um die Dampfkammer herum, in parallelen Bahnen oder auch schleifenförmig erstrecken.

Die Anordnung des Kanals ist ebenfalls grundsätzlich beliebig. Er kann beispielsweise in den Umgebungsabschnitt integriert oder außenseitig oder innenseitig auf den Umgebungsabschnitt aufgebracht oder an diesen angebracht sein. Es sollte lediglich eine wärmeleitfähige Verbindung zwischen dem Kanal und dem Umgebungsabschnitt bestehen, um die Wärmeenergie des Dampfes an den Umgebungsabschnitt weiterleiten zu können, so dass sich dieser aufheizen kann.

In einer weiteren vorteilhaften Ausführungsform ist eine Kühlvorrichtung zur selektiven Kühlung des Kavitätsabschnittes über ein Kühlmittel, insbesondere Wasser, vorgesehen.

Die Einleitung von Wasser als Kühlmittel in die Dampfkammer zur Abkühlung auch des Schaumstoffes auf Entformtemperatur ist hinlänglich bekannt. Jedoch wird davon auch ungewünschterweise der Umgebungsbereich der Dampfkammerwandung erfasst.

Die Kühlvorrichtung kühlt lediglich den den Schaumstoff berührenden Kavitätsabschnitt selektiv. Die Ausführungsform der Kühlvorrichtung ist dabei grundsätzlich beliebig. Die Kühlung kann beispielsweise einerseits durch das am Kavitätsabschnitt kondensierte Wasser aus einem vorherigen Prozessschritt oder aber auch beispielsweise durch zusätzlich auf den Kavitätsabschnitt aufgebrachtes Wasser erfolgen.

In einer weiteren vorteilhaften Ausführungsform weist die Kühlvorrichtung zumindest eine Kühlmittelzuleitung auf, wobei die Kühlmittelzuleitung derart angeordnet ist, dass im Wesentlichen nur der Kavitätsabschnitt der Dampfkammerwandung mit dem Kühlmittel in Berührung kommen kann. Diese Kühlmittelzuleitung kann beispielsweise in einer Wasserdüse münden, wobei mit dieser Wasserdüse Wasser auf den Kavitätsabschnitt der Dampfkammerwandung aufgebracht werden kann. Durch dieses zusätzliche Wasser wird der Effekt der Transpirationskühlung verstärkt. Die selektive Aufbringung des Kühlmittels begrenzt den Effekt der Kühlung durch Wärmeleitung und Transpirationskühlung örtlich auf den Bereich, mit dem das Kühlmittel in Berührung kommt. Es wird daher dafür gesorgt, dass das Kühlmittel lediglich im Wesentlichen mit dem Kavitätsabschnitt der Dampfkammerwandung in Berührung kommen kann.

Dazu kann beispielsweise eine Auffangvorrichtung unter dem Kavitätsabschnitt innerhalb der Dampfkammer installiert werden, wobei mit dieser Auffangvorrichtung Spritzwasser und von dem Kavitätsabschnitt abtropfendes Wasser aufgefangen und über eine geeignete Leitung aus der Dampfkammer herausgeführt werden kann, ohne dass das Kühlmittel mit dem Umgebungsabschnitt der Dampfkammerwandung in Berührung kommen kann.

Weiterhin können zur Vereinfachung der Prozesssteuerung Temperatursensoren vorgesehen sein, wobei mit den Temperatursensoren die Temperatur der Formkavität, des abfließenden Kühlmittels und des Formteils ermittelt werden kann.

In einer weiteren vorteilhaften Ausführungsform weist die Kühlvorrichtung eine am Kavitätsabschnitt der Dampfkammerwandung angeordnete Speicherschicht auf, wobei die Speicherschicht ein Kühlmittel zumindest temporär örtlich am Kavitätsabschnitt der Dampfkammerwandung fixieren kann.

Die Ausführungsform der Speicherschicht ist grundsätzlich beliebig. In einer besonders vorteilhaften Ausführungsform ist die Speicherschicht beispielsweise aus einem porösen Material hergestellt, beispielsweise einem Metallschaum. Die Speicherschicht kann das bei der Bedampfung entstehende Kondensat an dem Ort festhalten, an dem es entstanden ist. In der Regel wird nämlich das bei der Bedampfung mit Wasserdampf entstehende Wasser an dem Kavitätsabschnitt durch die Schwerkraft herunterlaufen. Somit ist eine Transpirationskühlung an den Stellen, an denen sich kein Wasser mehr befindet, nicht mehr gewährleistet. Die Speicherschicht fixiert das Kühlmittel bis zum Zeitpunkt der Kühlung örtlich am Kavitätsabschnitt.

Damit kann unter Umständen ganz auf eine Kühlmittelzuleitung und dadurch erforderliche Systeme verzichtet werden. Beispielsweise könnte auch ein zusätzliches Einsprühen des Kavitätsabschnittes mit Kühlwasser entfallen.

Weiterhin wird ein Verfahren zum Betrieb einer Vorrichtung zur Herstellung von Schaumstoffformteilen nach Anspruch 1 vorgeschlagen, wobei die Verschweißung des Schaumstoffes mittels Durchleitung von Dampf zumindest durch die Dampfkammer erfolgt, und wobei der Umgebungsabschnitt der Dampfkammerwandung mittels der Wärmevorrichtung zumindest während des Durchleitens des Dampfes auf einer Temperatur gehalten wird, die oberhalb der Temperatur des durchgeleiteten Dampfes liegt.

Wie bereits beschrieben, kann dadurch eine durch den Effekt der Transpirationskühlung hervorgerufene Abkühlung des Umgebungsabschnittes der Dampfkammerwandung vermieden werden.

In einer weiteren Ausführungsform des Verfahrens erfolgt in einem weiteren Verfahrensschritt eine Kühlung zumindest des Schaumstoffes, wobei währenddessen bereits ein Vakuum an die Dampfkammer angelegt ist.

Die Kühlung des Schaumstoffes erfolgt beispielsweise mittelbar durch die oben beschriebene Kühlung des Kavitätsabschnittes der Dampfkammerwandung. Ein Anlegen eines Vakuums an die Dampfkammer während der Kühlung beschleunigt den Kühlungsvorgang. Es wird nämlich dadurch die Verdampfungstemperatur des auf dem Kavitätsbereich befindlichen Wassers gesenkt. Dadurch tritt der Effekt der Transpirationskühlung schneller ein.

In einer weiteren vorteilhaften Ausführungsform des Verfahrens ist eine Kühlung über ein Kühlmittel, insbesondere Wasser, vorgesehen, wobei die Menge an Kühlmittel pro Zeiteinheit derart bemessen ist, dass eine restlose Verdampfung des Kühlmittels stets gewährleistet ist. Durch diese Maßnahme können beispielsweise komplizierte Auffangmechanismen für überschüssiges Kühlmittel, welches nicht an den Umgebungsabschnitt der Dampfkammerwandung gelangen darf, umgangen werden.

Die Menge an Kühlmittel pro Zeiteinheit stellt einen Kühlmittelstrom dar. Dieser Kühlmittelstrom kann eine beispielsweise experimentell ermittelte, feste Vorgabegröße haben oder beispielsweise regelbar sein. Weiterhin kann an ein gepulstes Aufbringen des Kühlmittels gedacht werden.

Mehrere Ausführungsformen einer Dampfkammer sind in den Zeichnungen dargestellt und werden nachfolgend beispielhaft erläutert.

Es zeigen:
- **Fig. 1**: zwei Dampfkammern beim herkömmlichen Herstellungsprozess von Schaumstoffformteilen im Querschnitt;
- **Fig. 2**: zwei Dampfkammern bei der Bedampfung im Querschnitt;
- **Fig. 3**: zwei Dampfkammern beim Kühlen im Querschnitt;
- **Fig. 4**: eine erste Ausführungsform einer Wärmevorrichtung im Querschnitt;
- **Fig. 5**: eine zweite Ausführungsform einer Wärmevorrichtung im Querschnitt;
- **Fig. 6**: eine dritte Ausführungsform einer Wärmevorrichtung im Querschnitt;
- **Fig. 7**: eine vierte Ausführungsform einer Wärmevorrichtung im Querschnitt;
- **Fig. 8**: eine fünfte Ausführungsform einer Wärmevorrichtung in Längs- und Querschnitt;
- **Fig. 9**: eine sechste Ausführungsform einer Wärmevorrichtung in perspektivischer Ansicht;
- **Fig. 10**: eine siebte Ausführungsform einer Wärmevorrichtung in Draufsicht und Querschnitt;
- **Fig. 11**: eine achte Ausführungsform einer Wärmevorrichtung in Draufsicht und Querschnitt.

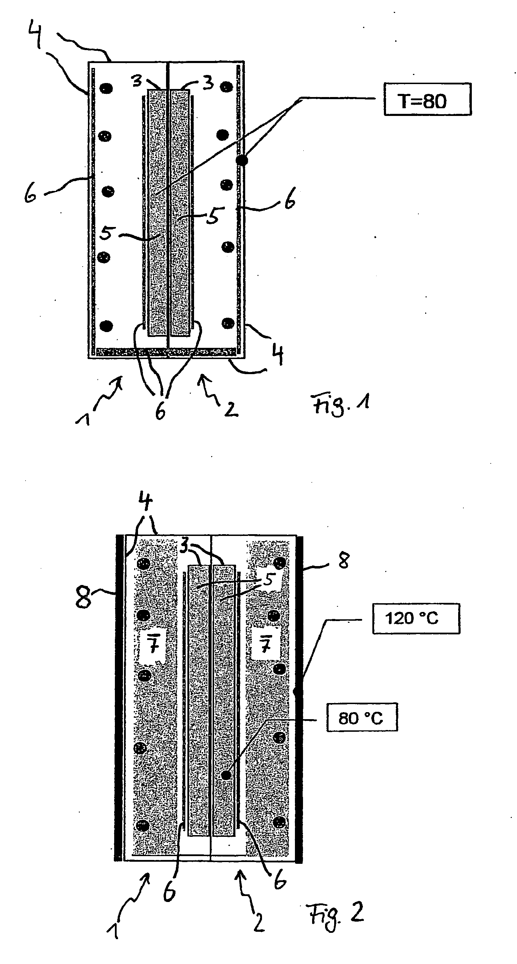

**Fig. 1** stellt zunächst zwei Dampfkammerhälften 1, 2 dar, die konventionell bedampft werden. Die Dampfkammerwandungen der Dampfkammerhälften 1, 2 weisen jeweils einen Kavitätsabschnitt 3 und einen Umgebungsabschnitt 4 auf. Der Kavitätsabschnitt 3 ist der Formkavität 5 zugewandt und der Umgebungsabschnitt 4 ist der Formkavität 5 abgewandt.

Zu Beginn der Bedampfung haben alle Oberflächen - so auch der Kavitätsabschnitt 3 und der Umgebungsabschnitt 4 - der Dampfkammer 1, 2 die Entformungstemperatur von beispielsweise 80°C. Durch die Bedampfung entsteht im Wesentlichen bei 6 Kondensat. Somit sind im Wesentlichen alle Oberflächen 3, 4 innerhalb der Dampfkammer 1, 2 nach dem Bedampfen feucht (mit Kondensat belegt). Im Ergebnis würden diese Bereiche in folgenden Prozessschritten insbesondere durch Transpirationseffekte abkühlen.

Fig. 2 zeigt zwei Dampfkammern 1, 2 wobei die Dampfkammerwandung, genau wie in Fig. 1 beschrieben, über einen der Formkavität 5 zugewandten Kavitätsabschnitt 3 und einen der Formkavität 5 abgewandten Umgebungsabschnitt 4 verfügt.

Beim Bedampfen der Dampfkammern 1, 2 mit Wasserdampf 7 wird der Umgebungsabschnitt 4 der Dampfkammerwandung bereichsweise mittels der Wärmevorrichtung 8 auf einer Temperatur von 120°C gehalten. Bei Berührung dieser beheizten Flächen mit Wasserdampf 7 schlägt sich kein Wasserdampf als Kondensat nieder, da der Wasserdampf kälter ist als 120°C. Der Umgebungsabschnitt 4 bleibt im Ergebnis trocken und unterliegt im Folgenden keiner Transpirationskühlung. Eine Kondensation erfolgt im Wesentlichen nur entlang des Kavitätsabschnittes 3 bei 6. Nach dem Bedampfen wäre also der Umgebungsabschnitt 4 nach wie vor heiß, jedoch ohne Kondensationsschicht und somit trocken, während der Kavitätsabschnitt 3 feucht wäre, und somit mit einer Kondensationsschicht belegt.

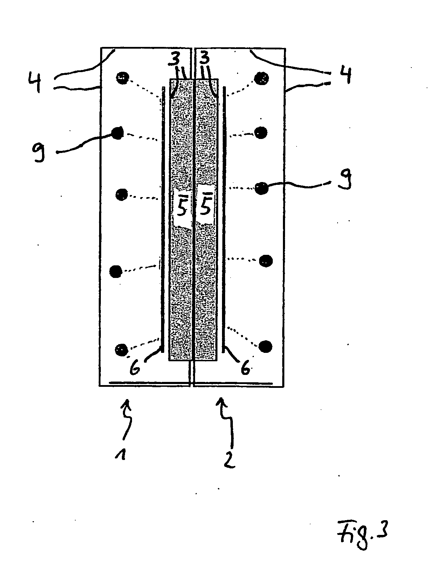

Fig. 3 zeigt die Kühlung. Die Dampfkammern 1, 2 sind umgebungsabschnittsseitig 4 trocken. Diese Bereiche sollen möglichst heiß bleiben. Lediglich kavitätsabschnittsseitig 3 ist eine Kondensationsschicht 6 vorhanden.

Beim konventionellen Formteilprozess würde mit einer großen Menge Kühlwasser, die in die Dampfkammer eingeleitet und diese komplett ausfüllen würde, gekühlt. Dieses Kühlwasser würde den Dampf kondensieren und über den Effekt der Wärmeleitung die Energie von der erhitzten Dampfkammerwandung aufnehmen und abtransportieren. Im Ergebnis würde sich dann aber auch der Umgebungsabschnitt 4 der Dampfkammerwandung abkühlen. Dies ist jedoch nicht erwünscht.

Die Dampfkammern 1, 2 enthalten daher eine Kühlvorrichtung 9, mit der sich die selektive Kühlung des Kavitätsabschnittes 3 unterstützen lässt. Die Kondensatschicht 6 wird nämlich allein in aller Regel nicht ausreichen, um den Kavitätsabschnitt 3 mittels des Transpirationseffektes abzukühlen. Durch die Schwerkraft läuft nämlich das kondensierte Wasser der Kondensatschicht 6 am Kavitätsabschnitt 3 herunter.

Die Kühlvorrichtung 9 kann daher in einer Sprühvorrichtung bestehen, die eine dünne Wasserschicht auf den Kavitätsabschnitt 3 aufbringt, welche unter gleichzeitiger Vakuumeinwirkung dort verdampfen kann, wo sie aufgebracht wurde. Das Aufsprühen kann dabei auch pulsierend bzw. schräg erfolgen, um Spritzwasser zu vermeiden. Die Temperatur des aufzubringenden Kühlwassers müsste idealerweise knapp unterhalb der Verdampfungstemperatur unter Vakuumbedingungen liegen. Es darf kein bzw. nur möglichst wenig Spritzwasser auf den Umgebungsabschnitt 4 der Dampfkammerwandung gelangen. Durch dieses selektive Kühlen würden im Ergebnis nur der Kavitätsabschnitt 3, die Formkavität 5 und das Formstück selbst eine Abkühlung erfahren. An den weiterhin heißen und trockenen Umgebungsabschnitten 4 der Dampfkammerwandung kann währenddessen keine Verdampfung und somit kein Transpirationseffekt stattfinden, da dazu noch eine Kondensatschicht vorhanden sein müsste. Diese Flächen bleiben also idealerweise auf Ausgangstemperatur.

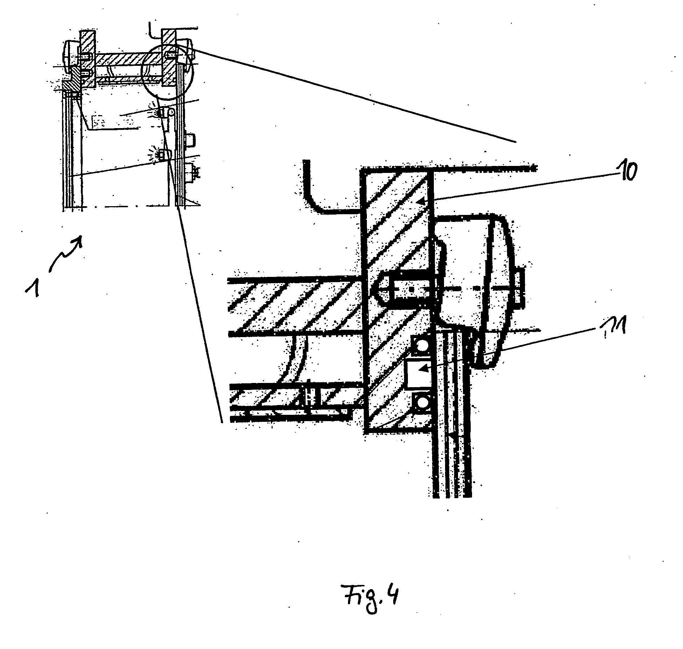

Die **Fig. 4 bis Fig. 11** zeigen verschiedene Ausführungsformen der Wärmevorrichtung 8 an Umgebungsabschnitt 4 der Dampfkammerwandung.

**Fig. 4** zeigt einen Abschnitt einer Dampfkammer 1, wobei in den Rahmen 10 der Dampfkammer 1 ein Kanal 11 integriert ist. Der Kanal 11 kann beispielsweise bei Herstellung der Dampfkammer 1 durch Einfräsen einer Nut hergestellt werden. Durch den Kanal 11 wird Wasserdampf geleitet, der mit dem Rahmen 10 wärmeleitend in Verbindung steht. Dadurch kann der Dampf seine Energie an den Rahmen 10 abgeben und diesen aufwärmen. Die Nut kann den ganzen Rahmen 10, quasi ringförmig umspannen, um eine möglichst großflächige Wärmung zu erreichen. Der Kanal 11 kann auch durch Aufbringung oder Einbringung eines Rohres an oder in den Rahmen 10 realisiert werden. Die Befestigung eines solchen Rohres kann beispielsweise durch Verschweißung erfolgen. Ob diese Verschweißung innen oder außen am Rahmen 10 erfolgt, ist grundsätzlich beliebig.

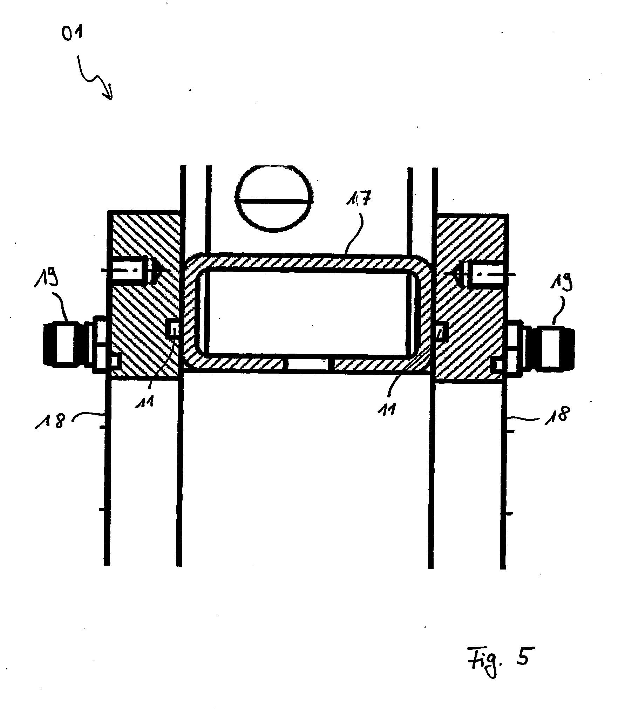

**Fig. 5** zeigt eine der Fig. 4 ähnliche Ausführungsform eines Abschnitts einer Dampfkammer 1, wobei der Rahmen der Dampfkammer 1 hier ein hohles Vierkantrohr 17 aufweist, das unter anderem auch der Zuführung des Prozessdampfes dienen kann. Weiterhin weisen die am hohlen Vierkantrohr 17 anliegenden Rahmenplatten 18 an der Anlagefläche eine beispielsweise in die Rahmenplatte 18 eingefräste Nut 11 auf, durch die der Wärmedampf geleitet werden kann. Dadurch lässt sich unter anderem der Rahmen, bzw. das hohle Vierkantrohr 17, aber auch die Rahmenplatte 18 selbst zum Erzielen des genannten Effektes erwärmen. Die Zuführung des Wärmedampfes erfolgt über die Wärmedampfzuführungen 19 an den Außenseiten der Rahmenplatte 18.

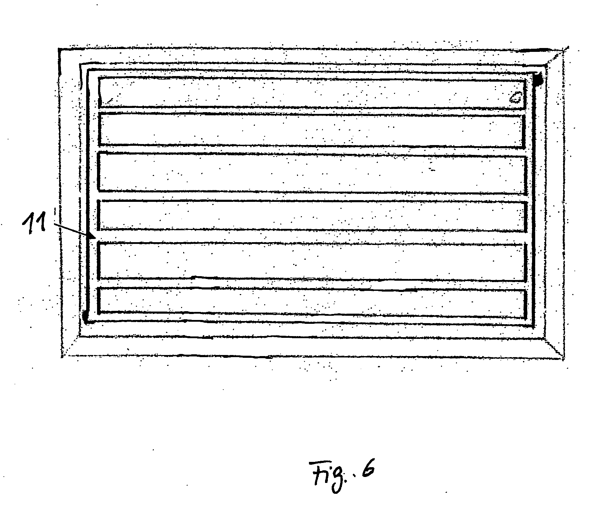

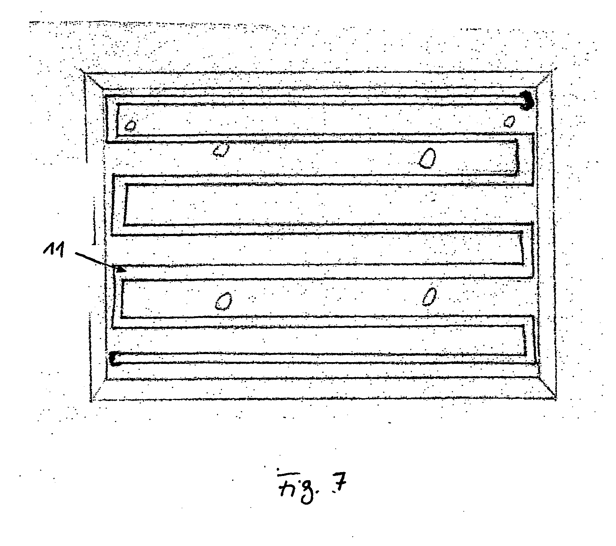

**Fig. 6** zeigt einen parallelen Verlauf der Kanäle 11 und **Fig. 7** zeigt deren schleifenförmigen Verlauf.

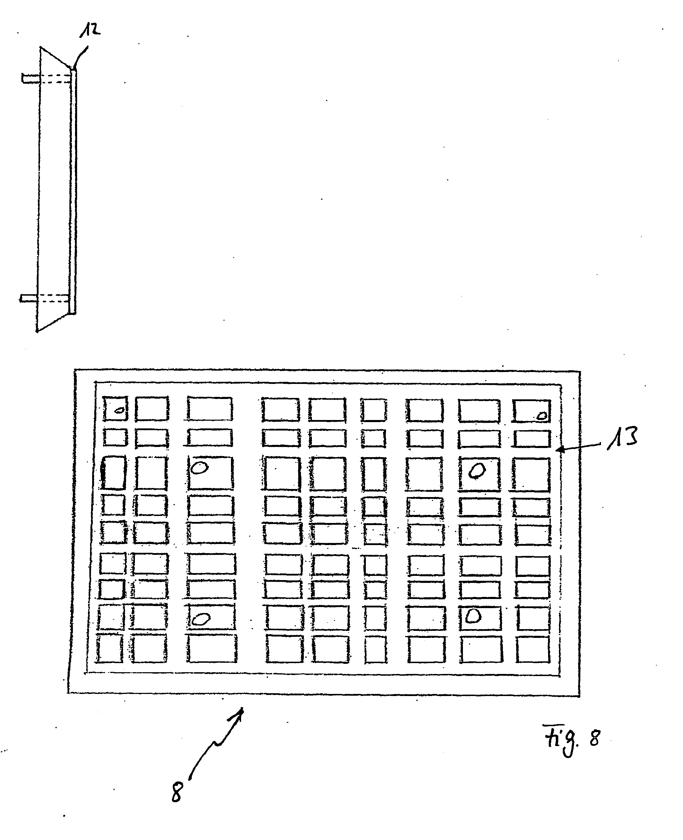

**Fig. 8** zeigt eine weitere Wärmevorrichtung 8 in Form einer zusätzlichen Platte 12, die innen oder außen an den Umgebungsabschnitt 4 der Dampfkammer 1, 2 angebracht werden kann. Die Platte 12 weist ein eingefrästes Gittermuster mit Vertiefungen 13 auf. Durch dieses Gittermuster mit Vertiefungen 13 wird der Dampf am Umgebungsabschnitt 4 vorbeigeleitet. Die Anbringung der Platte 12 innen oder außen am Umgebungsabschnitt ist grundsätzlich beliebig.

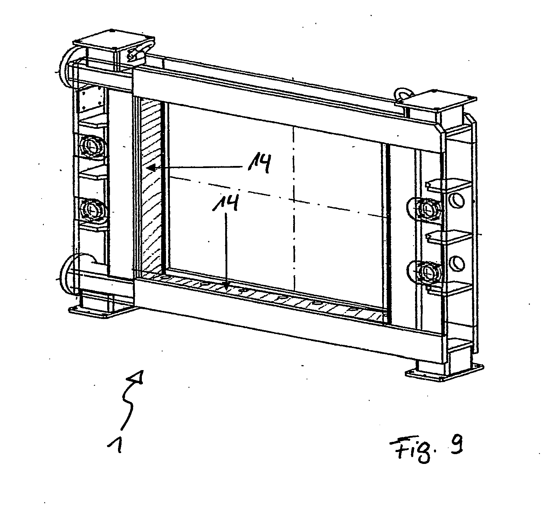

**Fig. 9** zeigt eine weitere Ausführungsform der Dampfkammer 1 mit einer Heizfolie 14 als Wärmevorrichtung. Die Heizfolie kann mit elektrischer Energie versorgt werden und sowohl innen als auch außen am Umgebungsabschnitt der Dampfkammerwandung angebracht werden. Bei Anbringung der Heizfolie 14 innerhalb der Dampfkammer 1 ist auf einen Schutz der Heizfolie 14 vor Wasserdampf zu achten.

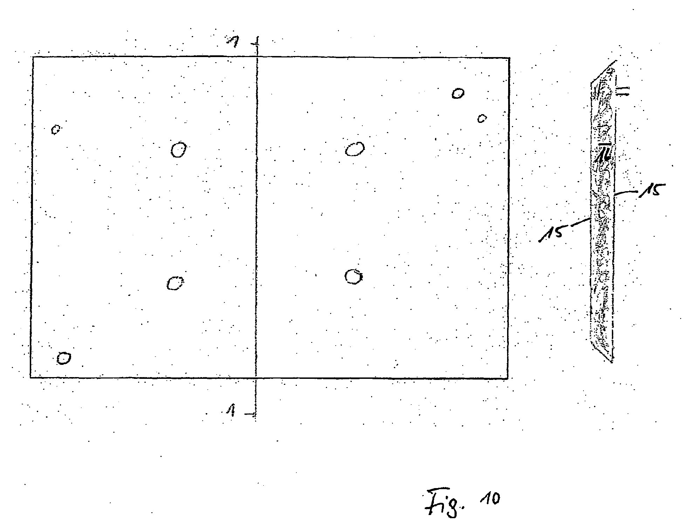

**Fig. 10** zeigt eine weitere Ausführungsform der Wärmevorrichtung, wobei zumindest ein Bereich des Umgebungsabschnittes 4 mit einem doppelten Boden 15 ausgestattet ist. Der entstehende Hohlraum wird mit offenporigem Schaum 16 gefüllt. Der Schaum sollte in der Dampfatmosphäre beständig sein. Aluminiumschaum wäre eine Möglichkeit. Durch diesen Schaum 16 wird dann der Dampf geleitet, und erhitzt damit den Umgebungsabschnitt 4.

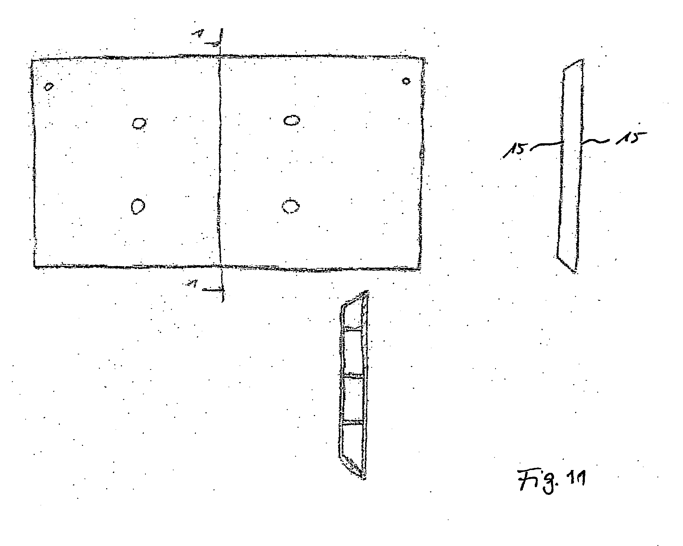

**Fig. 11** zeigt eine weitere Ausführungsform der Wärmevorrichtung. Diese Ausführungsform weist ebenfalls einen doppelten Boden 15 auf, wobei auf den Schaum im Innenraum zwischen dem doppelten Boden verzichtet wird. Der Dampf wird durch den Innenraum im doppelten Boden 15 hindurchgeführt.

## Patentansprüche

1. Dampfkammer (1, 2) für eine Vorrichtung zur Herstellung von Schaumstoffformteilen in einer Formkavität, wobei die Dampfkammer (1, 2) eine Dampfkammerwandung aufweist, und wobei die Dampfkammerwandung zumindest einen der Formkavität (5) zugewandten Kavitätsabschnitt (3) und einen der Formkavität (5) abgewandten Umgebungsabschnitt (4) aufweist,
**dadurch gekennzeichnet,**
**dass** der Umgebungsabschnitt (4) der Dampfkammerwandung zumindest bereichsweise eine Wärmevorrichtung (8) aufweist, wobei der Umgebungsabschnitt (4) der Dampfkammerwandung selektiv durch die Wärmevorrichtung (8) erwärmt werden kann, und dass die Dampfkammer (1, 2) eine Kühlvorrichtung (9) aufweist, wobei der Kavitätsabschnitt (3) selektiv durch die Kühlvorrichtung (9) gekühlt werden kann, wobei der Kavitätsabschnitt (3) keine derartige Wärmevorrichtung (8) aufweist, so dass der Umgebungsabschnitt im Herstellungs-Prozesszykluss bei einer definierten konstanten Temperatur oberhalb der Temperatur des in die Dampfkammer (1, 2) geleiteten Dampfes gehalten werden kann, während der Kavitätsbereich (3) selektiv durch die Kühlvorrichtung (9) gekühlt werden kann.

2. Dampfkammer nach Anspruch 1,
**dadurch gekennzeichnet,**
**dass** die Wärme über Dampf (7), insbesondere Wasserdampf, zugeführt wird.

3. Dampfkammer nach Anspruch 2,
**dadurch gekennzeichnet,**
**dass** am und/oder im Umgcbungsabschnitt (4) der Dampfkammerwandung zumindest ein Kanal (11, 13, 15, 16) vorgesehen ist, wobei der Dampf (7) durch den Kanal (11, 13, 15, 16) geleitet werden kann.

4. Dampfkammer nach Anspruch 3.
**dadurch gekennzeichnet,**
**dass** eine Kühlvorrichtung (9) zur selektiven Kühlung des Kavitätsabschnitts (3) über ein Kühlmittel, insbesondere Wasser, vorgesehen ist.

5. Dampfkammer nach Anspruch 4,
**dadurch gekennzeichnet,**
**dass** die Kühlvorrichtung (9) zumindest eine Kühlmittelzuleitung (9) aufweist, wobei die Kühlmittelzuleitung (9) derart angeordnet ist, dass im Wesentlichen nur der Kavitätsabschnitt (3) der Dampfkammerwandung mit dem Kühlmittel in Berührung kommen kann.

6. Dampfkammer nach Anspruch 3 oder 4,
**dadurch gekennzeichnet.**
**dass** die Kühlvorrichtung (9) eine am Kavitätsabschnitt (3) der Dampfkammerwandung angeordnete Speicherschicht aufweist, wobei die Speicherschicht ein Kühlmittel zumindest temporär örtlich am Kavitätsabschnitt (3) der Dampfkammerwandung fixieren kann.

7. Verfahren zum Betrieb einer Vorrichtung zur Herstellung von Schaumstoffformteilen nach Anspruch 1, wobei die Verschweißung des Schaumstoffes mittels Durchleitung von Dampf (7) zumindest durch die Dampfkammer (1, 2) erfolgt.
**dadurch gekennzeichnet.**
**dass** der Umgebungsabschnitt (4) der Dampfkammerwandung mittels der Wärmevorrichtung (8) zumindest während des Durchleitens des Dampfes (7) auf einer Temperatur gehalten wird. die oberhalb der Temperatur des durchgeleiteten Dampfes (7) liegt.

8. Verfahren nach Anspruch 7,
**dadurch gekennzeichnet,**
**dass** in einem weiteren Verfahrensschritt eine Kühlung zumindest des Schaumstoffes erfolgt, wobei während dessen bereits ein Vakuum an die Dampfkammer (1, 2) angelegt ist.

9. Verfahren nach Anspruch 7 oder 8,
**dadurch gekennzeichnet,**
**dass** eine Kühlung über ein Kühlmittel, insbesondere Wasser, vorgesehen ist, wobei die Menge an Kühlmittel pro Zeiteinheit derart bemessen ist, dass eine restlose Verdampfung des Kühlmittels stets gewährleistet ist.

## Claims

1. Steam chamber (1, 2) for a device for producing moulded foam parts in a mold cavity, wherein the steam chamber (1, 2) features a steam chamber wall, and wherein the steam chamber wall features at least one cavity section (3) facing the mold cavity (5) and a surrounding section (4) facing away from the mold cavity (5),
**characterized in that**
the surrounding section (4) of the steam chamber wall at least in a portion thereof features a heating device (8), wherein the surrounding section (4) of the steam chamber wall can be selectively heated by the heating device (8), and the steam chamber (1, 2) features a cooling device (9), wherein the cavity section (3) can be selectively cooled by the cooling device (9), wherein the cavity section (3) does not feature such a heating device (8), so that in the production process cycle the surrounding section can be held at a defined and constant temperature above the temperature of the vapour being introduced into the steam chamber (1, 2), while the cavity section (3) can be selectively cooled by the cooling device (9).

2. Steam chamber according to Claim 1,
**characterized in that**
the heat is supplied with the aid of vapour (7), in particular water vapour.

3. Steam chamber according to Claim 2,
**characterized in that**
provision is made for at least one duct (11, 13, 15, 16) at and/or in the surrounding section (4) of the steam chamber wall, wherein the vapour (7) can be passed through said duct (11, 13, 15, 16).

4. Steam chamber according to Claim 3,
**characterized in that**
provision is made for a cooling device (9) for selectively cooling the cavity section (3) with the aid of a coolant, in particular water.

5. Steam chamber according to Claim 4,
**characterized in that**
the cooling device (9) features at least one coolant supply duct (9), wherein said coolant supply duct (9) is disposed in such a manner that essentially only the cavity section (9) of the steam chamber wall can come into contact with the coolant.

6. Steam chamber according to Claim 3 or 4,
**characterized in that**
the cooling device (9) features a storage layer being disposed at the cavity section (3) of the steam chamber wall, wherein said storage layer is capable of fixing a coolant at least temporarily and locally at the cavity section (3) of the steam chamber wall.

7. Method for operating a device for producing moulded foam parts according to Claim 1, wherein welding of the foam material is performed by means of passing vapour (7) at least through the steam chamber (1, 2),
**characterized in that**
the surrounding section (4) of the steam chamber wall is held at a temperature lying above the temperature of the vapour (7), which has been passed through, at least during the passage of the vapour (7), by means of the heating device (8).

8. Method according to Claim 7,
**characterized in that**
at least the foam material is cooled in another process step, wherein during this process, a vacuum is already applied at the steam chamber (1, 2).

9. Method according to Claim 7 or 8,
**characterized in that**
provision is made for a cooling process using at least one coolant, in particular water, wherein the quantity of the coolant per time device is selected such that a complete evaporation of the coolant is always guaranteed.

## Revendications

1. Chambre à vapeur (1, 2) pour un dispositif de fabrication de pièces moulées en mousse dans une cavité de moule, la chambre à vapeur (1, 2) présentant une paroi de chambre à vapeur, ladite paroi de chambre à vapeur présentant au moins une section de cavité (3) étant tournée vers la cavité de moule (5) et une section environnante (4) étant détournée de la cavité de moule (5),
**caractérisée en ce que**
la section environnante (4) de la paroi de chambre à vapeur présente un dispositif de chauffage (8) au moins dans une certaine partie, la section environnante (4) de la paroi de chambre à vapeur pouvant être chauffée sélectivement par le dispositif de chauffage (8), et la chambre à vapeur (1, 2) présente un dispositif de refroidissement (09), la section de cavité (3) pouvant être refroidie sélectivement par le dispositif de refroidissement (9), la section de cavité (3) ne présentant pas de tel dispositif de chauffage (8), de telle sorte que la section environnante puisse être maintenue à une température définie et constante inférieure à la température de la vapeur étant introduite dans la chambre à vapeur (1, 2) dans le cycle de processus de production alors que la section de cavité (3) peut être refroidie sélectivement par le dispositif de refroidissement (9).

2. Chambre à vapeur selon la revendication 1,
**caractérisée en ce que**
la chaleur est fournie à l'aide de vapeur (7), en particulier de vapeur d'eau.

3. Chambre à vapeur selon la revendication 2,
**caractérisée en ce qu'**
au moins un conduit (11, 13, 15, 16) est prévu à et/ou dans la section environnante (4) de la paroi de chambre à vapeur, la vapeur (7) pouvant être passée à travers ledit conduit (11, 13, 15, 16).

4. Chambre à vapeur selon la revendication 3,
**caractérisée en ce qu'**
au moins un dispositif de refroidissement (9) est prévu pour le refroidissement sélectif de la section de cavité (3) à l'aide d'un agent réfrigérant, en particulier de l'eau.

5. Chambre à vapeur selon la revendication 4,
**caractérisée en ce que**
le dispositif de refroidissement (9) présente au moins une conduite d'alimentation en agent réfrigérant (9), la conduite d'alimentation en agent réfrigérant (9) étant agencée de telle sorte que, pour l'essentiel, seulement la section de cavité (3) de la paroi de chambre à vapeur puisse être mise en contact avec l'agent réfrigérant.

6. Chambre à vapeur selon la revendication 3 ou 4,
**caractérisée en ce que**
le dispositif de refroidissement (9) présente une couche de stockage étant agencée à la section de cavité (3) de la paroi de chambre à vapeur, ladite couche de stockage pouvant fixer un agent réfrigérant au moins de façon temporaire et locale à la section de cavité (3) de la paroi de chambre à vapeur.

7. Procédé pour l'opération d'un dispositif de fabrication de pièces moulées en mousse selon la revendication 1, le soudage du matériau de mousse s'effectuant à l'aide du passage de vapeur (7) au moins à travers la chambre à vapeur (1, 2),
**caractérisé en ce que**
la section environnante (4) de la paroi de chambre à vapeur est maintenue à une température supérieure à la température de la vapeur (7) passée au moins lors du passage de la vapeur (7).

8. Procédé selon la revendication 7,
**caractérisé en ce qu'**
au moins le matériau de mousse est refroidi au cours d'une étape de processus additionnelle, un vide étant déjà appliqué dans la chambre à vapeur (1, 2) lors dudit processus.

9. Procédé selon la revendication 7 ou 8,
**caractérisé en ce qu'**
un refroidissement s'effectue à l'aide d'un agent réfrigérant, en particulier de l'eau, la quantité d'agent réfrigérant par unité de temps étant sélectionnée telle que l'évaporation complète de l'agent réfrigérant soit toujours assurée.
